# EUROPEAN PATENT SPECIFICATION

(11) **EP 2 285 209 B1**
(45) Date of publication and mention of the grant of the patent: **27.01.2016**
(21) Application number: 09745882.2
(22) Date of filing: 08.05.2009
(51) Int. Cl.: A01G 23/00, B65B 27/10, B26D 5/20

(54) **METHOD AND COMPRESSION DEVICE FOR PROCESSING WOOD**
VERFAHREN UND PRESSVORRICHTUNG ZUR HOLZVERARBEITUNG
PROCÉDÉ DE TRAITEMENT DU BOIS ET DISPOSITIF DE COMPRESSION ASSOCIÉS

(30) Priority: 15.05.2008 FI 20085458
(43) Date of publication of application: 23.02.2011
(73) Proprietor: Fixteri Oy, 40800 Vaajakoski (FI)
(72) Inventor: ROMO, Pasi, FI-51460 Luusniemi (FI)
(74) Representative: Kolster Oy Ab
(86) International application number: PCT/FI2009/050376
(87) International publication number: WO 2009/138557

(56) References cited:
- EP-A1- 1 563 726
- WO-A1-2007/138165
- FI-B- 117 269
- US-A1- 2006 086 413

## Description

### BACKGROUND OF THE INVENTION

The invention relates to a method for compressing wood. Wood material is fed into a feed chamber by means of a feeding device, after which the wood material is cut by a cutting device. Then, the wood material is compressed in a compression chamber into a smaller volume, producing a wood bale, which may be utilized in energy production or as raw material.

The invention further relates to a compression device for processing wood. The field of the invention is explained in more detail in the preambles of the independent claims of the application.

Because of rising energy prices, more attention is presently paid on the use of felling waste, i.e. branches, twigs, crowns and other wood material that can be used as fuel wood. Vehicles have been developed for collecting fuel wood, the vehicles being provided with processing equipment compressing the wood and binding the wood into easily processable elongated bundles. The bundles are left to dry, after which they are collected from the forest and transported to an energy plant for chipping and combustion. Raw material bales may also be formed and the wood material therein may be used as fibre raw material. FI 117 269 describes a compression device. Document WO2007/138165 A1 describes a method for narvesting and an arrangement for processing wood.

It has been observed that there is a need to improve the efficiency of compression devices and balers.

### BRIEF DESCRIPTION OF THE INVENTION

It is an object of the present invention to provide a new and improved method and compression device for processing wood.

The method according to the invention is characterized by delivering new wood material to the feeding device while the previous dose of wood material is still on the cutting device; preventing the new wood material from moving to the cutting device by means of at least one mechanical stopper; and releasing the new wood material held back by the stopper after the cutting device and the feed chamber are ready to receive the new wood material.

The compression device according to the invention is characterized in that the feeding device comprises at least one stopper located before the cutting device in the feeding direction; and that the stopper is transversally movable by means of at least one actuator to a feed line and, accordingly, away from the feed line for affecting the feeding of the wood material.

An idea of the invention is that at the discharge end of the feeding device there are one or more stoppers movable in the transverse direction of the feed line. The stopper may be placed onto the feed line to prevent the wood material from moving towards the feed chamber on a feeding table.

The invention provides an advantage that, if desired, a stopper may be used for preventing the wood material delivered onto the feeding device from moving against the cutting device. Thus, the wood material does neither push the cutting device nor damage it. The use of a stopper further improves the efficiency of the compression device, as new wood material may constantly be delivered to the feeding device, although the cutting of the previous dose of wood material would still be unfinished and the feed chamber would not yet be ready to receive the new wood material. Thus, wood material can in a way be temporarily stored in the feeding device. Especially when the compression device is provided in a forest machine with felling devices, it is important for the sake of efficiency that wood can be felled constantly and that wood material can be delivered to the feeding device at a suitable rate in accordance with the felling process. The operation of the stopper can be controlled as required by the work cycle of the compression device.

It is the idea of an embodiment that the stopper is arranged to be pressed against the portion of the wood being cut that extends to the feeding device. As the stopper supports the wood against the feeding table or the like during the cutting, additional torsional or other stresses applied to the cutting device can be avoided. The cutting is controlled. The stopper also supports the wood on the feeding device in the vicinity of the cutting point and prevents uncontrolled movements of the wood material after the cutting. In this way, it is possible to avoid problems arising, for instance, when particularly long wood or wood with heavy crowns has been placed onto the feeding device. Furthermore, the use of a stopper allows a conveyor or a similar transfer means above the feeding table to be lifted to its upper position in order to deliver new wood material to the feeding device so that the lifting does not endanger the supporting of the wood material on the cutting device. On the other hand, this provides an advantage that the feeding device may be dimensioned relatively short, since the support effect, conventionally achieved with a great length of the feeding table, can be compensated for by pressing the stopper. However, it is easier to handle a short feeding device in a forest.

It is the idea of an embodiment that the stopper is a plate-like member. A plate-like stopper is simple and durable. It also requires little space and is easy to arrange in the structure of the feeding device. It is also easy to control and support the movements of the stopper plate by means of suitable guide surfaces, for instance.

It is the idea of an embodiment that wood material is fed to and cut in the feed chamber in at least two stages before the wood material is transferred away from the feed chamber. Between the stages, the relative position of the feeding device and the feed chamber is changed in the vertical direction, and thus new wood material fed into the feed chamber at the latter stage does not hit the previous wood material fed and cut at the previous stage. The new wood material may thus be fed above the cut-off wood material that already is in the feed chamber. Wood material may in a way be temporarily stored in the feed chamber before it is transferred to the actual intermediate storage or compression chamber. The solution facilitates and speeds up the processing of individual long tree trunks, in particular. Long trunks can be quickly moved away from the feeding table, which improves the mobility of a forest machine.

It is the idea of an embodiment that the feeding device is moved vertically to the feed chamber. The feeding device is provided with one or more lifting devices, by which the feeding device can be moved.

It is the idea of an embodiment that the bottom of the feed chamber is moved vertically downwards with respect to the feeding device, whereupon wood material can be fed above the cut-off wood material that already is in the feed chamber.

### BRIEF DESCRIPTION OF THE FIGURES

Some embodiments of the invention are explained in more detail in the attached drawings, in which
Figure 1 schematically shows a side view of a compression device for wood material, arranged on a movable carrier,
Figure 2 schematically shows a compression device from the rear end of a vehicle,
Figure 3 schematically shows a perspective view of a feeding device provided with a plate-like stopper,
Figure 4 schematically shows a side view of a second feeding device, wherein a feed track is arranged to act as a stopper,
Figure 5 schematically shows a side view of a third feeding device, which is vertically movable, and
Figure 6 schematically shows a side view of the feeding device of Figure 5, lifted upwards with respect to the feed chamber.

In the figures, some embodiments of the invention are shown in a simplified manner for the sake of clarity. In the figures, like parts are denoted with like reference numerals.

### DETAILED DESCRIPTION OF THE INVENTION

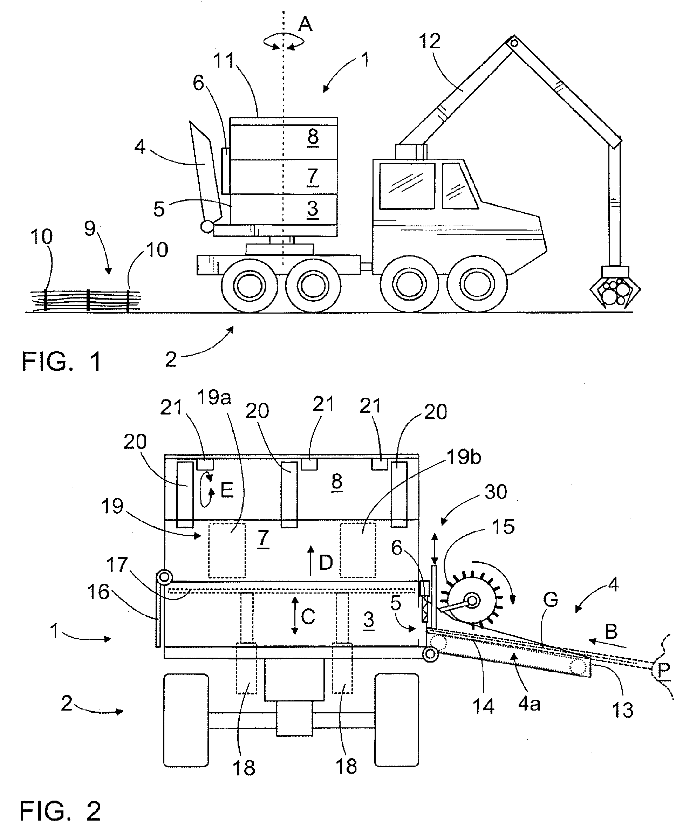

In Figure 1, a compression device 1 for wood material is arranged on a movable carrier 2. The movable carrier 2 may for instance be a forest tractor or a similar all-terrain vehicle, by which the compression device 1 may be transported to a forest. The compression device 1 may be arranged on the carrier 2 in such a manner that it can be turned as indicated by arrow A to a desired position with respect to the carrier 2, for instance transversally to the vehicle, as shown in Figure 2. Thus, the compression device 1 may be directed parallel to the wood material in the forest, allowing the wood material to be fed more quickly. The compression device 1 comprises a feed chamber 3, into which wood material, such as twigs, small-dimensioned wood, felling waste or any wood suitable for use as an energy source or raw material, can be fed by means of a feeding device 4. In Figure 1, the feeding device 4 is shown in a greatly simplified manner and turned to its transport position. The feed chamber 3 is provided with a feed opening 5 for feeding wood material into the compression device 1. The feed opening 5 is further provided with a cutting device 6, by which the wood material can be cut after an appropriate dose of wood is fed into the feed chamber 3. An intermediate chamber 7 may be placed above the feed chamber 3 and a compression chamber 8 may be placed on top of the intermediate chamber 7. If necessary, the intermediate chamber 7 can be used for temporarily storing cut-off wood material, if a previous bundle of wood material is still being processed in the compression chamber 8. In addition, the intermediate chamber 7 can be used for collecting several doses of cut-off wood material to form one larger entity, before transferring them to the compression chamber 8. In the compression chamber 8 the wood material can be compressed so as to reduce the volume thereof. In addition, the compression forms the wood material into a bundle 9, around which one or more binding members 10, such as a strip or a band, may be arranged. The compression chamber 8 may comprise an openable lid 11 for removing the wood material bundle 9 from the compression chamber 8. Wood material can be fed to the feeding device 4 by means of a crane 12, which may be provided with wood clamping jaws or a processing device including felling devices.

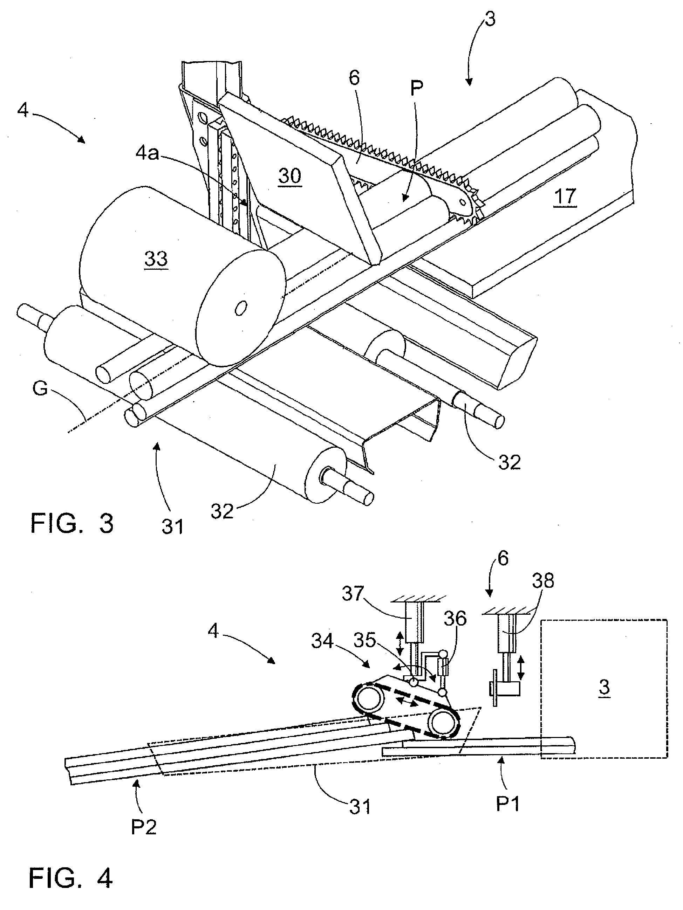

Figure 2 illustrates the structure of a compression device 1 in more detail. The feeding device 4 comprises a feeding table 4a and may also have raised edges 13 or similar surfaces for guiding and supporting wood material. On the bottom of the feeding table 4a there may be a first conveyor 14, which may for instance be a belt or chain conveyor or one or more rolls, as shown later in Figure 3. Furthermore, above the first conveyor 14 there may be a second conveyor 15 in such a manner that material on the feed conveyor 4 is pressed between the conveyors 14 and 15 and pre-compressed before being transferred to the feed chamber 3. The second conveyor 15 may for instance be a rotating track or a feed roll. The feeding device 4 pushes wood material in feeding direction B along a predetermined distance into the feed chamber 3, after which the wood material is cut by means of the cutting device 6. The operation of the cutting device 6 may be based, for instance, on a circular saw, chain saw or any chipping or non-chipping cutting member. After the cutting, the feed conveyors 14 and 15 may be stopped and the wood material in the feed chamber 3 may be transferred in the vertical direction from the feed chamber 3 to the intermediate chamber 7. The feed chamber 3 has a bottom 17, which may be arranged movably in the vertical direction C. The bottom 17 may be moved by one or more actuators 18. The actuator 18 may be a pressure medium cylinder, for instance. The vertical inner surfaces of the feed chamber 3 may comprise guide members supporting the bottom 17 during transfer.

The intermediate chamber 7 may comprise means 19 for receiving the wood material which is lifted by means of the bottom 17 to the intermediate chamber 7. These means may comprise at least one conveyor 19, which may consist of one or more parts 19a, 19b. The conveyor 19 is arranged in such a manner that it can compress wood material between its conveyor means and simultaneously transport wood vertically towards the compression chamber 8. Since the wood material is compressed and then processed in the conveyor 19, it facilitates the subsequent formation of a tight bundle of wood material in the compression chamber 8. If wood material is to be stored in the intermediate chamber 7, the conveyor 19 may be stopped, whereupon the wood material remains in its place between the conveyor means of the conveyor 19. After the intermediate chamber 7 has received a sufficiently big dose of wood for forming a bundle 9 of wood material and it has been made sure that the compression chamber 8 is free to receive wood material, compression jaws 20 between the compression chamber 8 and the intermediate chamber 7 can be opened and the wood material can be transferred by means of the conveyor 19 in direction D from the intermediate chamber 7 to the compression chamber 8. After this, the wood material may be further compressed into a smaller volume. The compression may be performed by the compression jaws 20 and/or other compression means in the compression chamber 8. The compression jaws 20 may be arranged between the conveyor parts 19a and 19b such that the conveyor 19 and the compression jaws 20 move partially in- between each other. The compression jaws 20 may thus be taken under the wood material bundle being formed. The compression chamber 8 may further comprise one or more binding devices 21 for winding a suitable binding member 10 around the bundle 9 of wood material in direction E.

Figure 2 also shows that the feeding device 4 is provided with at least one stopper 30, which may be for instance a plate-like member, which is transversally movable with respect to a feed line G of the feeding device 4. Arranged on the feed line G, the stopper 30 forms a mechanical barrier and prevents new wood material delivered to the feeding device 4 from protruding to the feed chamber 3 and the cutting device 6. Also, when the stopper 30 is closed, the crane 12 may be used for pushing the butt ends of the new wood material against the stopper 30. In the feeding direction B, the stopper 30 is arranged before the cutting device 6. It is to be noted that the feed line G refers to a location where the wood material to be fed is arranged to travel on the feeding device 4.

Figure 3 shows a detail of the feeding device 4. The feeding device 4 comprises a feeding table 31, which may be provided with one or more rolls 32, which may be either tractive or freely rotating. The feeding device 4 may further comprise an upper feed roll 33, which may be moved vertically. On the portion between the upper feed roll 33 and the cutting device 6, i.e. at the discharge end 4a of the feeding device, one or more stoppers 30, in this case plate-like members, are arranged, which can be moved transversally onto the feed line G. The stopper 30 may be arranged to move vertically, horizontally or at an oblique angle. Furthermore, there may two or more stoppers and they may be arranged to move in different directions with respect to one another in order to form a mechanical barrier on the feed line G. Figure 3 also shows the feed chamber's 3 bottom plate 17, which, in its initial position, is on the plane of the feed line G of the feeding device. As the figure shows, the stopper 30 may be arranged against the wood material P to be cut. When the wood material P is supported, it is easier to cut it, and the trunk ends on the feeding device 4 do not rise upwards due to the weight of the rear part of the wood after the cutting has been performed. The stopper 30 thus prevents new wood material delivered onto the feeding device 4 from protruding towards the feed chamber 3 and, on the other hand, supports the wood material under procession during the cutting.

Figure 4 shows an alternative feeding device 4, wherein the upper feed roll 33 is replaced by a feed track 34, which may be turned relative to a joint 35 by means of a turning device 36 so that it can form a mechanical barrier surface onto the feed line G after it has been stopped and moved downwards. The feed track 34 may thus act as both a feeding means and a stopper. Figure 4 also shows that the feed track 34 can be moved by means of a first actuator 37 and the cutting device 6 can be moved by means of a second actuator 38. The feed track 34 may be used for preventing new wood material P2 from protruding to the cutting device 6 and also for pressing the end part of the wood material P1 being cut.

The feeding table 4a may be a substantially smooth surface, along which the wood material to be fed may slide by means of the upper feed roll 33, upper feed roller 34 or a similar upper conveyor means 15. On the other hand, it may be possible to provide a feeding device 4 without an upper conveyor means 15, whereby the feeding is carried out by the lower conveyor means 14 only. In this case, wood material to be fed is naturally not pre-compressed and it may be challenging to control the wood material on the feeding device.

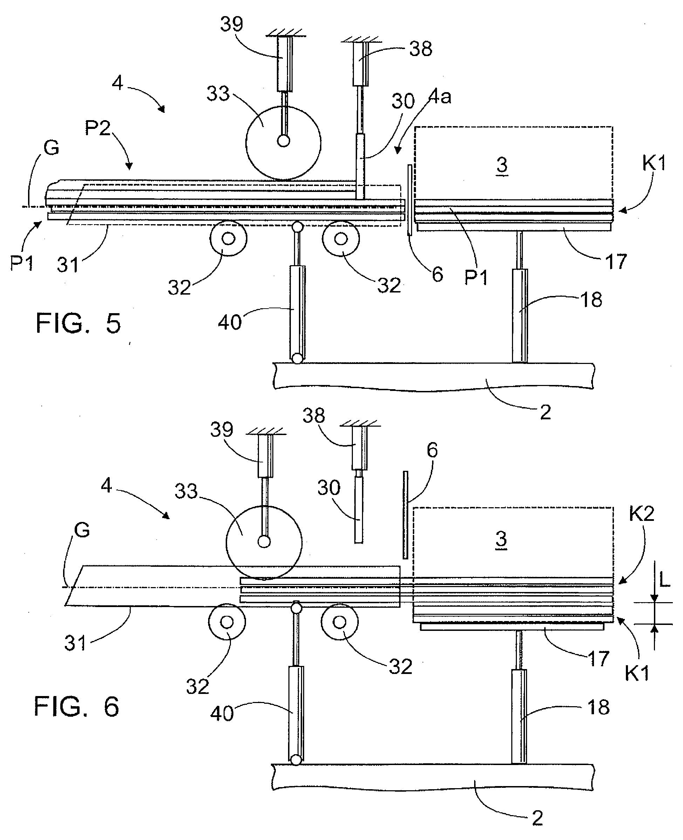

Figures 5 and 6 illustrate a work cycle of a feeding device 4. In Figure 5, the bottom 17 of the feed chamber and the feeding table 31 are substantially on the same plane. Wood material P1 has been fed into the feed chamber 3 by means of the upper feed roll 33 and the cutting device 6 has cut it. During the cutting, wood material may be supported by means of a stopper 30 transferred onto the feed line G. Some of the previous wood material P1 may still be on the feeding device 4 when new wood material P2 is delivered thereto. The upper feed roll 33 is moved away from the feed line and the new wood material P2 can be placed against the stopper 30. After the cutting, the feeding device 4 is lifted upwards, as shown in Figure 6. Then the stopper 30 is moved away from the feed line and a new feeding is performed, whereupon the fed wood material settles on top of the cut-off wood material in the feed chamber 3. After this, the stopper 30 is closed again, the upper feed roll 33 is lifted upwards and cutting is performed.

Alternatively, it is possible to move the bottom plate 17 of the feed chamber 3 downwards by means of the actuator 18 so that wood material can be fed on top of the cut-off wood material dose without that the ends of the wood material hit each other. Thus, two or more wood material layers K1, K2 can be formed one upon the other in the feed chamber 3 by moving the feeding device 4, the bottom plate 17, or both, in the vertical direction. The mutual vertical difference L achieved with this movement may be for instance 200 mm, the diameter of wood material typically processed with the compression device being smaller. Naturally the vertical difference may also be bigger, such as 200 to 400 mm.

It is noted that the cut-off wood material may also be transferred away from the feed chamber in some other way than by means of a vertically movable bottom plate. The bottom plate may be arranged to be transferred either horizontally or the transfer may be carried out by some means other than a bottom plate.

In some cases, the characteristics presented in this application may be used as such, irrespective of other characteristics. On the other hand, the characteristics presented in this application may be combined, if necessary, to generate different combinations.

The drawings and the related description are only intended to illustrate the idea of the invention. The details of the invention may vary within the scope of the claims.

## Claims

1. A method for processing wood, the method comprising:
feeding wood material (P) through a feed opening (5) of a processing device (1) into a feed chamber (3) by means of a feeding device (4);
cutting the wood material (P) by at least one cutting device (6) between the feeding device (4) and the feed chamber (3) after a predetermined amount of wood material has been fed into the feed chamber (3);
transferring the wood material in the feed chamber (3) away from the feed opening (5) after the cutting; and
compressing the cut-off wood material to reduce its volume and to form a wood material bundle;
**characterized by**
delivering new wood material (P2) to the feeding device while the previous dose of wood material (P1) is still on the cutting device (6);
preventing the new wood material (P2) from moving to the cutting device (6) by means of at least one mechanical stopper (30); and
releasing the new wood material (P2) held back by the stopper (30) after the cutting device (6) and the feed chamber are ready to receive the new wood material (P2).

2. A method as claimed in claim 1, **characterized by**
supporting the wood material to be cut by pressing the stopper (30) against it.

3. A method as claimed in claim 1 or 2, **characterized by**
feeding wood material (P) above the cut-off wood material dose that already is in the feed chamber (3).

4. A method as claimed in claim 3, **characterized by**
changing the relative vertical position of the feeding device (4) and the feed chamber (3) to feed wood material into at least two successive layers in the feed chamber (3).

5. A method as claimed in any one of the preceding claims, **char**- acterized by
using a plate-like member as a stopper.

6. A compression device for processing wood, the compression device comprising:
a feed chamber (3) with a feed opening (5);
at least one feeding device (4) arranged to feed wood material (P) on a feed line (G) through the feed opening (5) into the feed chamber (3);
at least one cutting device (6) arranged between the feeding device (4) and the feed chamber (3), which cutting device (6) is arranged to cut the wood material (P) after it has been fed into the feed chamber (3);
transfer means for transferring the cut-off wood material away from the feed chamber (3) into a compression chamber (8);
compression means for reducing the volume of the wood material in the compression chamber (8) and for forming a wood material bundle;
**characterized in that**
the feeding device (4) comprises at least one stopper (30) located before the cutting device (6) in the feeding direction (B); and that
the stopper (30) is transversally movable by means of at least one actuator (37) to the feed line (G) and, accordingly, away from the feed line (G) for affecting the feeding of the wood material (P).

## Patentansprüche

1. Verfahren zur Holzverarbeitung, bei welchem Verfahren:
Holzmaterial (P) durch eine Zuführöffnung (5) einer Verarbeitungsvorrichtung (1) in eine Zuführkammer (3) mittels einer Zuführvorrichtung (4) eingeführt wird;
das Holzmaterial (P) durch zumindest eine Schneidvorrichtung (6) zwischen der Zuführvorrichtung (4) und der Zuführkammer (3) geschnitten wird, nachdem eine vorbestimmte Menge Holzmaterial in die Zuführkammer (3) eingeführt worden ist;
das Holzmaterial in der Zuführkammer (3) weg von der Zuführöffnung (5) nach dem Schneiden gefördert wird; und
das abgeschnittene Holzmaterial zusammengepresst wird, um sein Volumen zu reduzieren und ein Holzmaterialbündel zu bilden;
**dadurch gekennzeichnet, dass**
neues Holzmaterial (P2) zur Zuführvorrichtung geliefert wird, während die vorherige Dosis von Holzmaterial (P1) noch an der Schneidvorrichtung (6) ist;
das neue Holzmaterial (P2) durch zumindest eine mechanische Anschlagvorrichtung (30) verhindert wird, sich zur Schneidvorrichtung (6) zu bewegen; und
das von der Anschlagvorrichtung (30) zurückgehaltene neue Holzmaterial (P2) freigegeben wird, nachdem die Schneidvorrichtung (6) und die Zuführkammer bereit sind, das neue Holzmaterial (P2) aufzunehmen.

2. Verfahren nach Patentanspruch 1, dadurch **gekennzeich**n e t , dass
das zu schneidende Holzmaterial gestützt wird, indem die Anschlagvorrichtung (30) daran gedrückt wird.

3. Verfahren nach Anspruch 1 oder 2, dadurch **gekennzeich**n e t , dass
Holzmaterial (P) über die abgeschnittene Holzmaterialdosis, die sich schon in der Zuführkammer (3) befindet, eingeführt wird.

4. Verfahren nach Patentanspruch 3, dadurch **gekennzeich**n e t , dass
die relative vertikale Position der Zuführvorrichtung (4) und der Zuführkammer (3) geändert wird, um Holzmaterial in zumindest zwei aufeinander liegende Schichten in der Zuführkammer (3) einzuführen.

5. Verfahren nach einem der vorhergehenden Ansprüche, **dadurch gekennzeichnet, dass** ein plattenförmiges Glied als Anschlagvorrichtung verwendet wird.

6. Pressvorrichtung zur Holzverarbeitung, welche Pressvorrichtung umfasst:
eine Zuführkammer (3) mit einer Zuführöffnung (5);
zumindest eine Zuführvorrichtung (4), die angeordnet ist, Holzmaterial (P) auf einer Zuführlinie (G) durch die Zuführöffnung (5) in die Zuführkammer (3) einzuführen;
zumindest eine Schneidvorrichtung (6), die zwischen der Zuführvorrichtung (4) und der Zuführkammer (3) angeordnet ist, welche Schneidvorrichtung (6) angeordnet ist, das Holzmaterial (P) zu schneiden, nachdem es in die Zuführkammer (3) eingeführt worden ist;
Fördermittel zur Förderung des abgeschnittenen Holzmaterials weg von der Zuführkammer (3) in eine Presskammer (8);
Pressmittel zur Reduzierung des Volumens des Holzmaterials in der Presskammer (8) und zur Bildung eines Holzmaterialbündels;
**dadurch gekennzeichnet, dass**
die Zuführvorrichtung (4) zumindest eine Anschlagvorrichtung (30) aufweist, die sich in Zuführrichtung (B) vor der Schneidvorrichtung (6) befindet; und dass
die Anschlagvorrichtung (30) durch zumindest einen Stellantrieb (37) auf die Zuführlinie (G) und dementsprechend weg von der Zuführlinie (G) in Querrichtung beweglich ist, um die Zuführung des Holzmaterials (P) zu beeinflussen.

## Revendications

1. Méthode de traitement du bois, la méthode comprenant :
l'alimentation en matériau de bois (P) à travers un orifice d'alimentation (5) d'un dispositif de traitement (1) dans une chambre d'alimentation (3) au moyen d'un dispositif d'alimentation (4) ;
la découpe du matériau de bois (P) par au moins un dispositif de découpe (6) entre le dispositif d'alimentation (4) et la chambre d'alimentation (3) après qu'une quantité prédéterminée de matériau de bois a été introduite dans la chambre d'alimentation (3) ;
le transfert du matériau de bois dans la chambre d'alimentation (3) depuis l'orifice d'alimentation (5) après la découpe ; et
la compression du matériau de bois découpé pour réduire son volume et pour former un paquet de matériau de bois ;
**caractérisée par**
la fourniture de nouveau matériau de bois (P2) au dispositif d'alimentation alors que la quantité précédente de matériau de bois (P1) se trouve encore sur le dispositif de découpe (6) ;
l'empêchement du déplacement du nouveau matériau de bois (P2) jusqu'au dispositif de coupe (6) au moyen d'au moins un dispositif d'arrêt mécanique (30) ; et
la libération du nouveau matériau de bois (P2) retenu par le dispositif d'arrêt (30) une fois que le dispositif de découpe (6) et la chambre d'alimentation sont prêts à recevoir le nouveau matériau de bois (P2).

2. Méthode selon la revendication 1, **caractérisée par**
le maintien du matériau de bois devant être découpé par pression du dispositif d'arrêt (30) contre lui.

3. Méthode selon la revendication 1 ou 2, **caractérisée par**
l'alimentation en matériau de bois (P) au-dessus de la quantité de matériau de bois découpé qui se trouve déjà dans la chambre d'alimentation (3).

4. Méthode selon la revendication 3, **caractérisée par**
la modification de la position verticale relative du dispositif d'alimentation (4) et de la chambre d'alimentation (3) pour amener le matériau de bois en au moins deux couches successives dans la chambre d'alimentation (3).

5. Méthode selon l'une quelconque des revendications précédentes, **caractérisée par**
l'utilisation d'un élément en forme de plaque en tant que dispositif d'arrêt.

6. Dispositif de compression pour le traitement de bois, le dispositif de compression comprenant :
une chambre d'alimentation (3) comportant un orifice d'alimentation (5) ;
au moins un dispositif d'alimentation (4) conçu pour amener le matériau de bois (P) sur une ligne d'alimentation (G) à travers l'orifice d'alimentation (5) dans la chambre d'alimentation (3) ;
au moins un dispositif de découpe (6) placé entre le dispositif d'alimentation (4) et la chambre d'alimentation (3), lequel dispositif de découpe (6) est conçu pour découper le matériau de bois (P) après qu'il a été amené dans la chambre d'alimentation (3) ;
des moyens de transfert pour transférer le matériau de bois découpé de la chambre d'alimentation (3) jusqu'à une chambre de compression (8) ;
des moyens de compression pour réduire le volume du matériau de bois dans la chambre de compression (8) et pour former un paquet de matériau de bois ;
**caractérisé en ce que**
le dispositif d'alimentation (4) comprend au moins un dispositif d'arrêt (30) placé avant le dispositif de découpe (6) dans la direction d'alimentation (B) ; et **en ce que**
le dispositif d'arrêt (30) est mobile transversalement à l'aide d'au moins un actionneur (37) jusqu'à la ligne d'alimentation (G), et en conséquence, en s'éloignant de la ligne d'alimentation (G) pour influer sur l'alimentation du matériau de bois (P).
